# EUROPÄISCHE PATENTSCHRIFT

(11) **EP 1 371 531 B1**
(45) Veröffentlichungstag und Bekanntmachung des Hinweises auf die Patenterteilung: **17.10.2007**
(21) Anmeldenummer: 03012752.6
(22) Anmeldetag: 05.06.2003
(51) Int. Cl.: B60R 22/26

(54) **Sicherheitsgurteinrichtung**
Safety belt arrangement
Arrangement de ceinture de sécurité

(30) Priorität: 12.06.2002 DE 10226052
(43) Veröffentlichungstag der Anmeldung: 17.12.2003
(73) Patentinhaber: ADAM OPEL AG, 65423 Rüsselsheim (DE)
(72) Erfinder: Martin, Roger, 64572 Klein-Gerau (DE)

(56) Entgegenhaltungen:
- FR-A- 2 232 210
- US-A- 3 941 419
- US-A- 4 057 290
- US-A- 5 957 499

## Beschreibung

Es sind Sicherheitsgurteinrichtungen für Kraftfahrzeuge bekannt, mit einem Gurtband, das mit einem freien Ende im unteren Innenraumbereich des Kraftfahrzeugs befestigt ist und sich im unbenutzten Zustand entlang einer Innenraumwand, insbesondere in einem Säulenbereich etwa senkrecht in den oberen Innenraumbereich erstreckt und dort über einen Umlenkbeschlag zu einem das Gurtband spannenden Gurtbandaufroller geführt ist, wobei im Bereich zwischen der Befestigung im unteren Innenraumbereich und dem Umlenkbeschlag eine plattenartige Schlosszunge größerer Breite als der Breite des Gurtbandes an dem Gurtband angeordnet ist, die mit einem Gurtschloss verbindbar ist.

Bei derartigen Sicherheitsgurteinrichtungen hält das gespannte Gurtband an den Außensitzen des Kraftfahrzeugs die Schlosszunge in einer Position, die von dem Passagier ein komfortables Greifen der Schlosszunge zum Anlegen des Gurtbandes und Verbinden der Schlosszunge mit dem Gurtschloss ermöglicht. Diese Position der Schlosszunge im unbenutzten Zustand der Sicherheitsgurteinrichtung befindet sich normalerweise in der oberen Hälfte des zwischen der Befestigung im unteren Innenraumbereich und dem Umlenkbeschlag an den Säulen der Karosserie. Dabei kann das Gurtband mit der Schlosszunge frei schwingen, was zum Anschlagen an die Innenraumwand und zum Entstehen von störenden Klapper- und Anschlaggeräuschen führt.

Bei umklappbaren Sitzlehnen kann es zu Gurtbeschädigungen kommen, wenn ein Wiederaufrichten der umgeklappten Sitzlehne zu einem Verklemmen oder gar Einquetschen des Gurtbandes an der Verriegelungsbetätigung der Sitzlehne führt. Zumindest kommt es bei dem Wiederaufrichten der umgeklappten Sitzlehne zu einem Verhaken des Gurtbandes an der Verriegelungsbetätigung.

Eine Sicherheitsgurteinrichtung, die gegenüber der vorstehend erörterten Sicherheitsgurteinrichtung zusätzlich eine Haltetasche aufweist und insofern gemäß dem Oberbegriff des Patentanspruches 1 ausgebildet ist, ist aus der US-B-5,957,499 bekannt. Bei dieser Sicherheitsgurteinrichtung dient die Haltetasche der Aufnahme der Schlosszunge. Die Haltetasche ist Bestandteil des Gurtbandes. Die durch Aufsetzen eines vorzugsweise textilen Materialabschnitts gebildete Tasche deckt die Schlosszunge weitgehend ab, so dass sie nirgends anschlagen kann.

Aufgabe der Erfindung ist es, eine Sicherheitsgurteinrichtung gemäß dem Oberbegriff des Patentanspruchs 1 so weiterzubilden, dass bei dieser störende Klapper- und Anschlaggeräusche vermieden werden und die Sicherheitsgurteinrichtung überdies eine neuartige und verbesserte Funktionalität aufweist.

Diese Aufgabe wird durch die Merkmale des kennzeichnenden Teils des Patentanspruchs 1 gelöst. Es ist somit vorgesehen, dass an der Innenraumwand die ..altetasche angeordnet ist, die zwei etwa senkrecht sich erstreckende, mit ihren Nutöffnungen einander zugewandte Führungsnuten aufweist, wobei der Abstand der Nutöffnungen voneinander etwa der Breite des Gurtbandes entspricht und die Schlosszunge von deren Einführöffnungen bildenden oberen Enden her bis zur Anlage an einem Anschlag in die Führungsnuten einführbar ist.

Durch diese Ausbildung wird im unbenutzten Zustand der Sicherheitsgurteinrichtung die Schlosszunge in der Haltetasche gehalten und kann insbesondere im Fahrbetrieb des Kraftfahrzeugs keine Klapper- und Anschlaggeräusche mehr Führungsnuten einführbar ist.
Durch diese Ausbildung wird im unbenutzten Zustand der Sicherheitsgurteinrichtung die Schlosszunge in der Haltetasche gehalten und kann insbesondere im Fahrbetrieb des Kraftfahrzeugs keine Klapper- und Anschlaggeräusche mehr erzeugen. Dies wird besonders sicher verhindert, wenn die Schlosszunge spielfrei in der Haltetasche gehalten wird.

Da gleichzeitig das Gurtband an der Innenraumwand angelegt gehalten wird, kommt es nicht mehr zu einem Verheddern und Einquetschen an der Verriegelungsbetätigung der Sitzlehne bei deren Aufrichten aus der umgeklappten Lage.

Zur verschiebbaren Anordnung der Schlosszunge auf dem Gurtband kann die Schlosszunge an ihrem oberen Endbereich einen sich quer zur Längserstreckung des Gurtbandes erstreckenden, durchgehenden Schlitz etwa gleicher Länge wie der Breite des Gurtbandes aufweisen, durch den das Gurtband geführt ist.

Damit kann die Schlosszunge beim Einführen in die Haltetasche immer in eine Position auf dem Gurtband geschoben werden, in der sowohl der zur Befestigung im unteren Innenraumbereich führende Teil des Gurtbandes als auch der zum Umlenkbeschlag führende Teil des Gurtbandes durch den Gurtbandaufroller gespannt ist und nicht Geräusche durch Anschlagen an der Innenraumwand erzeugen kann. Ist dabei bei in die Haltetasche eingeführter Schlosszunge das Gurtband oberhalb des Schlitzes innenraumseitig der Schlosszunge zum Umlenkbeschlag und unterhalb des Schlitzes innenraumabgewandt der Schlosszunge zum unteren Innenraumbereich geführt, so wird die Schlosszunge an ihrem oberen und unteren Bereich von dem unter leichter Vorspannung durch den Gurtbandroller befindlichen Gurtband spielfrei an die Innenraumwand gepresst.

Da dabei das untere Ende der Schlosszunge nicht direkt sondern über das Gurtband gedämpft an der Innenraumwand änliegt, können keine Reibspuren an der Innenraumwand entstehen.

Zur guten klapperfreien Führung der Schlosszunge kann der Abstand zwischen den Nutgründen der Führungsnuten etwa der Breite der Schlosszunge entsprechen.

Der Anschlag zur Anlage der Schlosszunge kann durch eine Verringerung der Nutbreite an den den Einführöffnungen entgegengesetzten Enden der Führungsnuten gebildet sein.

Eine andere Möglichkeit besteht darin, dass der Anschlag zur Anlage der Schlosszunge durch die die unteren Enden der Führungsnuten ganz oder teilweise verschießenden Anschlagwände gebildet ist.

Zur spielfreien Halterung der Schlosszunge können die von der Innenraumwand beabstandeten Nutwände der Führungsnuten zumindest in ihren den Einführöffnungen näheren Bereichen etwa senkrecht zur Innenraumwand elastisch federnd ausgebildet sein.

Die Beaufschlagung der Schlosszunge erfolgt weitgehend punktartig und damit besonders sicher, wenn zumindest eine der Nutwände einer Führungsnut mit einem zu der anderen Nutwand hin hervorstehenden Wulst versehen ist, wobei vorzugsweise der Wulst nahe der Einführöffnung der Führungsnut ausgebildet ist.

Ist die Haltetasche in einem etwa konvex in den Innenraum des Kraftfahrzeugs ragenden Bereich der Innenraumwand angeordnet, so führt dies besonders sicher zu einer Anlage des Gurtbandes oberhalb und unterhalb der Haltetasche.

Die Haltetasche kann als separates Bauteil auf der Innenraumwand befestigt sein, wobei die Haltetasche einfach herstellbar ist, wenn sie ein Kunststoffteil insbesondere ein Spritzguss-Kunststoffteil ist.

Besonders bauraum- und montagesparend kann die Haltetasche ein integrales Bauteil der Innenraumwand sein, das ebenfalls einfach herzustellen ist, wenn die Innenraumwand ein Kunststoffteil, insbesondere ein Spritzguss-Kunststoffteil ist.

Die Haltetasche kann erhaben von der Kontur der Innenraumwand hervorstehend angeordnet sein.

Ist die Haltetasche in die Kontur der Innenraumwand versenkt, insbesondere vollständig versenkt angeordnet, so geht durch sie kein Platz im Innenraum des Kraftfahrzeugs verloren.

Ausführungsbeispiele der Erfindung sind in der Zeichnung dargestellt und werden im folgenden näher beschrieben. Es zeigen
- Figur 1: eine perspektivischen Ansicht eines ersten Ausführungsbeispiels einer Sicherheitsgurteinrichtung
- Figur 2: eine Vorderansicht der Sicherheitsgurteinrichtung nach Figur 1,
- Figur 3: eine perspektivische Seitenansicht der Sicherheitsgurteinrichtung nach Figur 1,
- Figur 4: eine perspektivische Seitenansicht der Haltetasche der Sicherheitsgurteinrichtung nach Figur 1,
- Figur 5: einen Schnitt entlang der Linie V - V in Figur 2,
- Figur 6: einen Schnitt entlang der Linie VI - VI in Figur 2,
- Figur 7: einen Querschnitt eines zweiten Ausführungsbeispiels einer Sicherheitsgurteinrichtung,
- Figur 8: einen Schnitt entlang der Linie VIII - VIII in Figur 2,
- Figur 9: einen Schnitt entlang der Linie IX - IX in Figur 2.

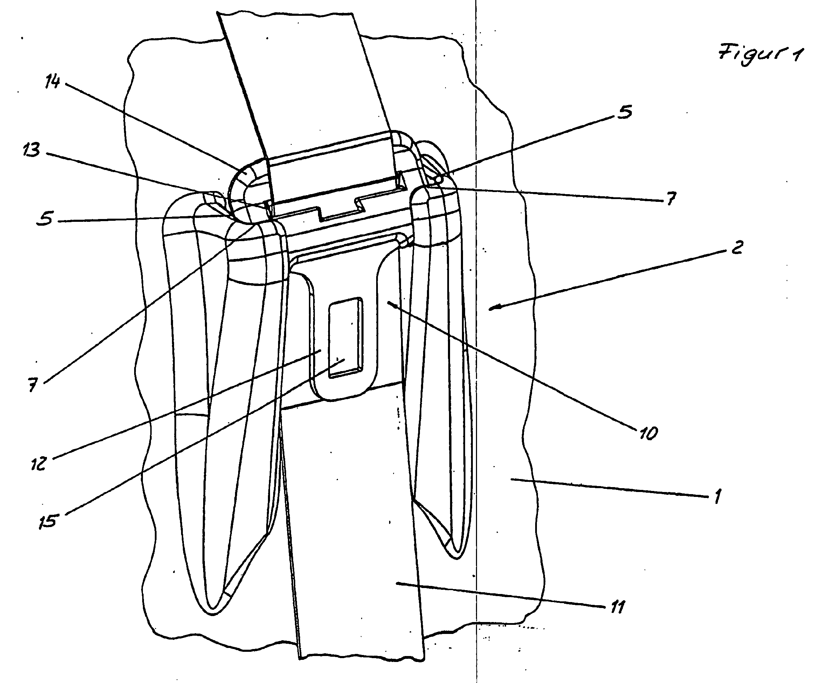

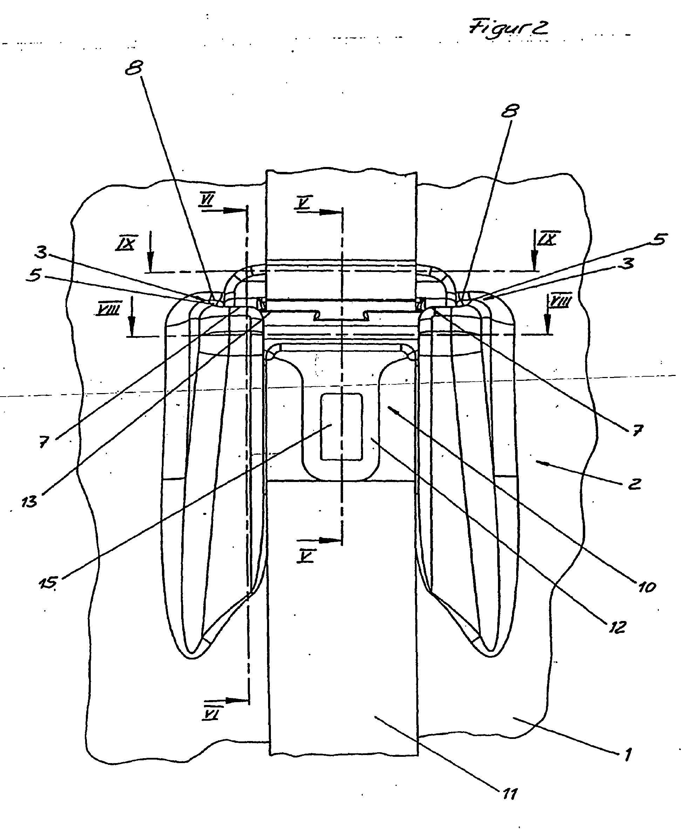

Die in den Figuren dargestellten Sicherheitsgurteinrichtungen sind an der Innenraumwand 1 eines Kraftfahrzeugs, vorzugsweise im Bereich einer der Säulen der Karosserie angeordnet. Die Sicherheitsgurteinrichtung weist eine Haltetasche 2 auf, die in einem etwa sphärisch, zumindest von oben nach unten etwa konvex in den Innenraum des Kraftfahrzeugs gewölbten Bereich der Innenraumwand 1 angeordnet ist. Sowohl die Haltetasche 2 als auch die Innenraumwand 1 sind als Spritzguss-Kunststoffteil ausgebildet, wobei in den Figuren 1 bis 6 und 8 bis 9 Haltetasche 2 und Innenraumwand 1 als ein integrales Bauteil ausgebildet sind und die Haltetasche 2 erhaben von der Kontur der Innenraumwand 1 in den Innenraum hervorsteht.

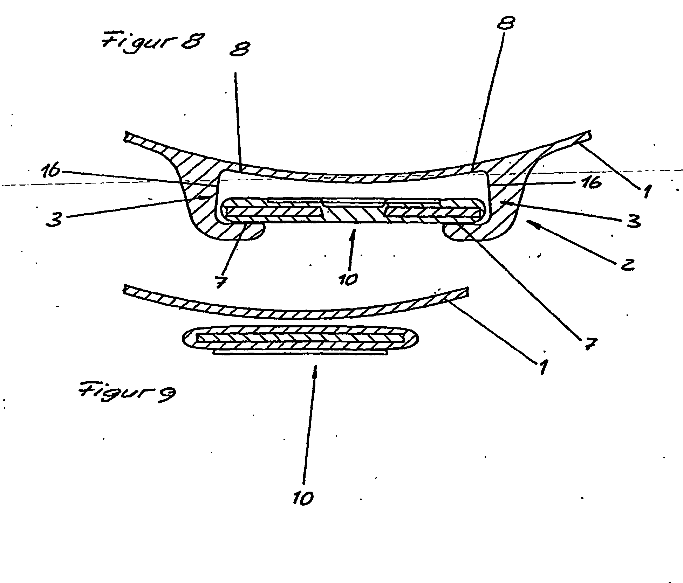

Bei dem Ausführungsbeispiel der Figur 7 bestehen Haltetasche 2 und Innenraumwand 1 aus mehreren zusammengefügten Teilen. Die Haltetasche 2 ist dabei in die Kontur der Innenraumwand 1 versenkt angeordnet.

Die Haltetasche 2 besitzt zwei etwa senkrecht sich erstreckende Führungsnuten 3 mit einander zugewandten Nutöffnungen 4. Die Führungsnuten 3 sind an ihrem oberen Ende offen und bilden Einführöffnungen 5. An den unteren Enden sind die Führungsnuten 3 durch Anschlagwände 6 geschlossen.

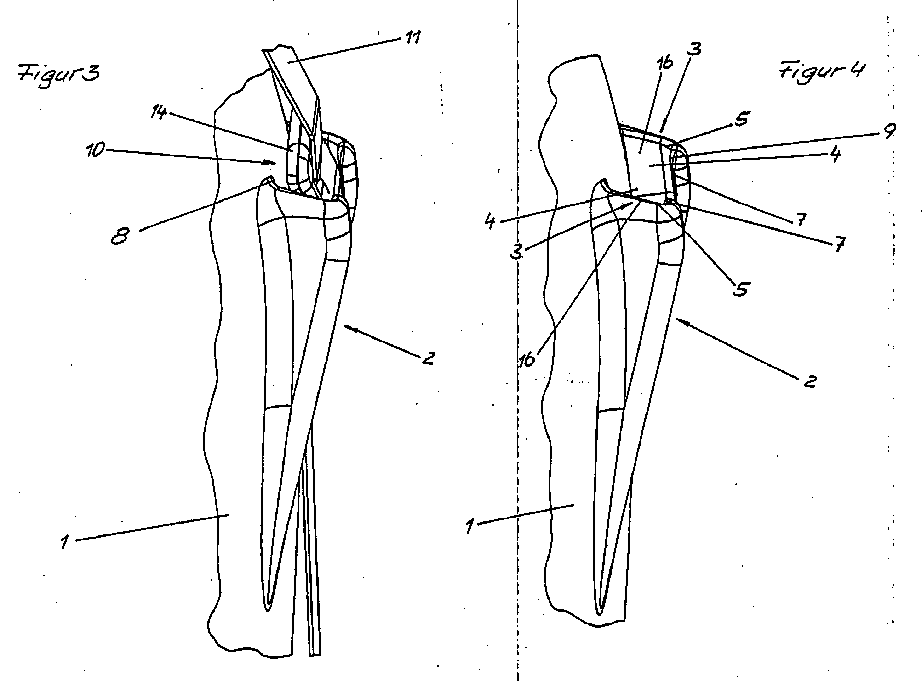

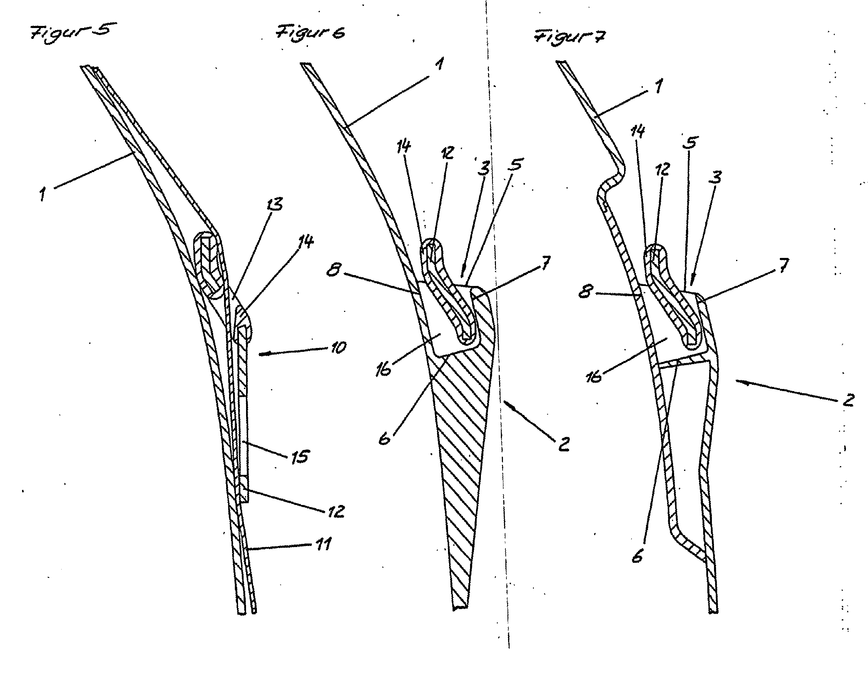

Wie insbesondere in den Figuren 3 und 4 zu erkennen ist, sind nahe der Einführöffnung 5 der von der Innenraumwand 1 beabstandeten Nutwände 7 an diesen zu den jeweils gegenüberliegenden Nutwänden 8 hin hervorstehende Wülste 9 ausgebildet. Weiterhin sind die Nutwände 7 etwa senkrecht zur Innenraumwand elastisch federnd.

In die Haltetasche 2 ist im unbenutztem Zustand der Sicherheitsgurteinrichtung eine an einem Gurtband 11 angeordnete Schlosszunge 10 einführbar und wird dort klapperfrei gehalten.

Das Gurtband 11 ist mit seinem einen freien Ende im unteren Innenraumbereich auf nicht dargestellte Weise befestigt und erstreckt sich im unbenutzten Zustand über die Haltetasche 2 in den oberen Innenraumbereich, wo es in ebenfalls nicht dargestellter Weise über einen Umlenkbeschlag zu einem Gurtbandaufroller geführt ist.

Die Schlosszunge 10 besteht aus einem in Erstreckungsrichtung des Gurtbandes 11 leicht s-artig geformten plattenartigen Zungenteil 12 aus Metall, das an seinem oberen Endbereich einen sich quer zur Längserstreckung des Gurtbandes 11 sich erstreckenden, durchgehenden Schlitz 13 gleicher Länge wie der Breite des Gurtbandes 11 aufweist. Der gesamte obere Endbereich einschließlich der Schlitzwandungen ist mit einer Kunststoffbeschichtung 14 versehen. In dem unteren, von der Kunststoffbeschichtung 14 freien Endbereich weist das Zungenteil 12 eine durchgehende Öffnung 15 auf, mit der die Schlosszunge 10 im benutzten Zustand der Sicherheitsgurteinrichtung in einem nicht dargestellten Gurtschloss verriegelbar ist.

Das Gurtband 11 ist von dem oberen Innenraumbereich kommend von der Seite des Innenraums her in den Schlitz 13 eingeführt und erstreckt sich auf der dem Innenraum abgewandten Seite des Zungenteils 12 weiter zum unteren Innenraumbereich.

Da der Abstand der einander zugewandten Nutöffnungen 4 der Führungsnuten 3 nur leicht größer als die Breite des Gurtbandes 11 und der Abstand zwischen den Nutgründen 16 der Führungsnuten 4 nur leicht größer als die Breite der Schlosszunge 10 in deren oberen Bereich ist, kommt bei von den Einführöffnungen 5 her in die Führungsnuten 3 eingeführter Schlosszunge 10 diese mit ihrem oberen Bereich direkt an der Innenraumwand 1 zur Anlage, während sie mit ihrem unteren Bereich über das Gurtband 11 an der Innenraumwand 1 anliegt.

In dieser Aufbewahrungslage der Schlosszunge 10 in der Haltetasche 2 bei unbenutztem Zustand der Sicherheitsgurteinrichtung kommt die Schlosszunge 10 an den Anschlagwänden 6 zur Auflage und kann so nicht nach unten aus den Führungsnuten 3 herausbewegt werden.

Da der Gurtbandaufroller das Gurtband 11 nach oben spannt und die Schlosszunge 10 verschiebbar auf dem Gurtband angeordnet ist, wird die Schlosszunge 10 in der Aufbewahrungslage in die Haltetasche 2 eingeführt und das Gurtband 11 sowohl mit seinen Bereichen oberhalb als auch unterhalb der Schlosszunge unter leichter Vorspannung an der Innenraumwand 1 in Anlage gehalten, so dass weder die Schlosszunge 10 noch das Gurtband 11 an der Innenraumwand 1 angeregt durch Erschütterungen im Fahrbetrieb des Kraftfahrzeugs anschlagen können. Zur weiteren Sicherung der Schlosszunge in der Haltetasche kann die Schlosszunge von den Wülsten 9 noch federnd gegen die Nutwände 8 beaufschlagt sein.

## Patentansprüche

1. Sicherheitsgurteinrichtung für ein Kraftfahrzeug, mit einem Gurtband (11), das mit einem freien Ende im unteren Innenraumbereich des Kraftfahrzeugs befestigt ist und sich im unbenutzten Zustand entlang einer Innenraumwand (1), insbesondere in einem Säulenbereich etwa senkrecht in den oberen Innenraumbereich erstreckt und dort über einen Umlenkbeschlag zu einem das Gurtband (11) spannenden Gurtbandaufroller geführt ist, wobei im Bereich zwischen der Befestigung im unteren Innenraumbereich und dem Umlenkbeschlag eine plattenartige Schlosszunge (10) größerer Breite als der Breite des Gurtbandes (11) an dem Gurtband (11) angeordnet ist, die mit einem Gurtschloss verbindbar ist, wobei eine Haltetasche (2) vorgesehen ist, **dadurch gekennzeichnet, dass** an der Innenraumwand (1) die Haltetasche (2) angeordnet ist, die zwei etwa senkrecht sich erstreckende, mit ihren Nutöffnungen (4) einander zugewandte Führungsnuten (3) aufweist, wobei der Abstand der Nutöffnungen (4) voneinander etwa der Breite des Gurtbandes (11) entspricht und die Schlosszunge (10) von deren Einführöffnungen (5) bildenden oberen Enden her bis zur Anlage an einem Anschlag in die Führungsnuten (3) einführbar ist.

2. Sicherheitsgurteinrichtung nach Anspruch 1, **dadurch gekennzeichnet, dass** die Schlosszunge (10) an ihrem oberen Endbereich einen sich quer zur Längserstreckung des Gurtbandes (11) erstreckenden, durchgehenden Schlitz (13) etwa gleicher Länge wie der Breite des Gurtbandes (11) aufweist, durch den das Gurtband (11) verschiebbar geführt ist.

3. Sicherheitsgurteinrichtung nach Anspruch 2, **dadurch gekennzeichnet, dass** bei in die Haltetasche (2) eingeführter Schlosszunge (10) das Gurtband (11) oberhalb des Schlitzes (13) innenraumseitig der Schlosszunge (10) zum Umlenkbeschlag und unterhalb des Schlitzes (13) innenraumabgewandt der Schlosszunge (10) zum unteren Innenraumbereich geführt ist.

4. Sicherheitsgurteinrichtung nach einem der vorhergehenden Ansprüche, **dadurch gekennzeichnet, dass** der Abstand zwischen den Nutgründen (16) der Führungsnuten (3) etwa der Breite der Schlosszunge (10) entspricht.

5. Sicherheitsgurteinrichtung nach einem der vorhergehenden Ansprüche, **dadurch gekennzeichnet, dass** der Anschlag zur Anlage der Schlosszunge durch eine Verringerung der Nutbreite an den den Einführöffnungen entgegengesetzten Enden der Führungsnuten gebildet ist.

6. Sicherheitsgurteinrichtung nach einem der Ansprüche 1 bis 4, **dadurch gekennzeichnet, dass** der Anschlag zur Anlage der Schlosszunge (10) durch die die unteren Enden der Führungsnuten (3) ganz oder teilweise verschießenden Anschlagwände (6) gebildet ist.

7. Sicherheitsgurteinrichtung nach einem der vorhergehenden Ansprüche, **dadurch gekennzeichnet, dass** die von der Innenraumwand (1) beabstandeten Nutwände (7) der Führungsnuten (3) zumindest in ihren den Einführöffnungen (5) näheren Bereichen etwa senkrecht zur Innenraumwand (1) elastisch federnd ausgebildet sind.

8. Sicherheitsgurteinrichtung nach Anspruch 7, **dadurch gekennzeichnet, dass** zumindest eine der Nutwände (7) einer Führungsnut (3) mit einem zu der anderen Nutwand (8) hin hervorstehenden Wulst (9) versehen ist.

9. Sicherheitsgurteinrichtung nach Anspruch 8, **dadurch gekennzeichnet, dass** der Wulst (9) nahe der Einführöffnung (5) der Führungsnut (3) ausgebildet ist.

10. Sicherheitsgurteinrichtung nach einem der vorhergehenden Ansprüche, **dadurch gekennzeichnet, dass** die Haltetasche (2) in einem etwa konvex von einem oberen zu einem unteren Bereich des Innenraums sich erstreckenden, in den Innenraum des Kraftfahrzeugs ragenden Bereich der Innenraumwand (1) angeordnet ist.

11. Sicherheitsgurtanordnung nach einem der vorhergehenden Ansprüche, **dadurch gekennzeichnet, dass** die Haltetasche als separates Bauteil auf der Innenraumwand befestigt ist.

12. Sicherheitsgurteinrichtung nach Anspruch 11, **dadurch gekennzeichnet, dass** die Haltetasche ein Kunststoffteil, insbesondere ein Spritzguss-Kunststoffteil ist.

13. Sicherheitsgurtanordnung nach einem der Ansprüche 1 bis 10, **dadurch gekennzeichnet, dass** die Haltetasche (2) ein integrales Bauteil der Innenraumwand (1) ist.

14. Sicherheitsgurteinrichtung nach einem der vorhergehenden Ansprüche, **dadurch gekennzeichnet, dass** die Innenraumwand (1) ein Kunststoffteil, insbesondere ein Spritzguss-Kunststoffteil ist.

15. Sicherheitsgurteinrichtung nach einem der vorhergehenden Ansprüche, **dadurch gekennzeichnet, dass** die Haltetasche (2) erhaben von der Kontur der Innenraumwand (1) hervorstehend angeordnet ist.

16. Sicherheitsgurteinrichtung nach einem der Ansprüche 1 bis 14, **dadurch gekennzeichnet, dass** die Haltetasche (2) in die Kontur der Innenraumwand (1) versenkt, insbesondere vollständig versenkt angeordnet ist.

## Claims

1. Safety belt assembly for a motor vehicle, with a belt band (11), which is fastened at a free end in the lower interior area of the motor vehicle and in the unused state extends along an interior wall (1), in particular in a column region, approximately vertically into the upper interior area and there is guided over a deflection fitting to a belt band retractor clamping the belt band (11), wherein in the region between the fastening in the lower interior area and the deflection fitting a plate-like locking tongue (10) with a larger width than the width of the belt band (11) is arranged on the belt band (11) and can be connected to a belt buckle, wherein a holding pocket (2) is provided, **characterised in that** the holding pocket (2), which has two guide grooves (3) extending approximately vertically and facing one another with their groove openings (4), is arranged on the interior wall (1), wherein the spacing of the groove openings (4) from one another corresponds approximately to the width of the belt band (11) and from its upper ends forming insertion openings (5) the locking tongue (10) can be inserted into the guide grooves (3) until it rests against a stop.

2. Safety belt assembly according to Claim 1, **characterised in that** at its upper end region the locking tongue (10) has a through slot (13), which extends transversely to the longitudinal extent of the belt band (11) and has approximately the same length as the width of the belt band (11), and through which the belt band (11) is displaceably guided.

3. Safety belt assembly according to Claim 2, **characterised in that** when the locking tongue (10) is inserted into the holding pocket (2), the belt band (11) is guided above the slot (13) on the side of the locking tongue (10) facing the interior to the deflection fitting and below the slot (13) on the side of the locking tongue (10) remote from the interior to the lower interior area.

4. Safety belt assembly according to one of the preceding claims, **characterised in that** the spacing between the groove bases (16) of the guide grooves (3) corresponds approximately to the width of the locking tongue (10).

5. Safety belt assembly according to one of the preceding claims, **characterised in that** the stop for abutment of the locking tongue is formed by a reduction in groove width at the ends of the guide grooves opposite the insertion openings.

6. Safety belt assembly according to one of Claims 1 to 4, **characterised in that** the stop for abutment of the locking tongue (10) is formed by the stop walls (6) completely or partially closing off the lower ends of the guide grooves (3).

7. Safety belt assembly according to one of the preceding claims, **characterised in that** the groove walls (7) of the guide grooves (3) spaced from the interior wall (1) are configured at least in their regions closer to the insertion openings (5) to be elastically resilient approximately perpendicular to the interior wall (1).

8. Safety belt assembly according to Claim 7, **characterised in that** at least one of the groove walls (7) of a guide groove (3) is provided with a bead (9) projecting towards the other groove wall (8).

9. Safety belt assembly according to Claim 8, **characterised in that** the bead (9) is configured close to the insertion opening (5) of the guide groove (3).

10. Safety belt assembly according to one of the preceding claims, **characterised in that** the holding pocket (2) is arranged in a region of the interior wall (1), which extends approximately convexly from an upper area to a lower area of the interior and projects into the interior of the motor vehicle.

11. Safety belt assembly according to one of the preceding claims, **characterised in that** the holding pocket is fastened on the interior wall as a separate structural part.

12. Safety belt assembly according to Claim 11, **characterised in that** the holding pocket is a plastic part, in particular an injection moulded plastic part.

13. Safety belt assembly according to one of Claims 1 to 10, **characterised in that** the holding pocket (2) is an integral part of the interior wall (1).

14. Safety belt assembly according to one of the preceding claims, **characterised in that** the interior wall (1) is a plastic part, in particular an injection moulded plastic part.

15. Safety belt assembly according to one of the preceding claims, **characterised in that** the holding pocket (2) is arranged to project from the contour of the interior wall (1) in a raised arrangement.

16. Safety belt assembly according to one of Claims 1 to 14, **characterised in that** the holding pocket (2) is arranged to be recessed into the contour of the interior wall (1), in particular completely recessed.

## Revendications

1. Dispositif de ceinture de sécurité pour un véhicule automobile, avec une sangle (11) qui est fixée par une extrémité libre à l'intérieur du véhicule automobile et qui, à l'état non utilisé, s'étend le long d'une paroi intérieure de l'habitacle (1), en particulier dans une zone de colonne, à peu près perpendiculairement dans l'espace intérieur supérieur où elle est guidée par une armature de renvoi vers un enrouleur de sangle qui tend la sangle (11), dans lequel une languette de fermeture (10) en forme de plaque ayant une largeur plus grande que la largeur de la sangle (11) et pouvant être reliée à un élément de fermeture de ceinture est placée sur la sangle (11) dans la zone entre la fixation dans l'espace intérieur inférieur et l'armature de renvoi et dans lequel il est prévu un étui de retenue (2), **caractérisé en ce que** l'étui de retenue (2) est disposé dans la paroi intérieure de l'habitacle (1) et comporte deux rainures de guidage (3) s'étendant à peu près perpendiculairement dont les ouvertures de rainures (4) sont dirigées l'une vers l'autre, la distance entre les ouvertures de rainures (4) correspondant à peu près à la largeur de la sangle (11) et la languette de fermeture (10) pouvant être introduite dans les rainures de guidage (3) à partir de ses extrémités supérieures formant les ouvertures introduction (5) jusqu'à l'appui sur une butée.

2. Dispositif de ceinture de sécurité selon la revendication 1, **caractérisé en ce que** la languette de fermeture (10) comporte dans sa zone d'extrémité supérieure une fente traversante (13) s'étendant perpendiculairement à l'extension longitudinale de la sangle (11), dont la longueur est à peu près identique à la largeur de la sangle (11) et à travers laquelle la sangle (11) est guidée de manière ajustable.

3. Dispositif de ceinture de sécurité selon la revendication (2), **caractérisé en ce que**, lorsque la languette de fermeture (10) est introduite dans l'étui de retenue (2), la sangle (11) au-dessus de la fente (13) du côté de l'intérieur de la languette de fermeture (10) est guidée vers l'armature de fermeture et en dessous de la fente (13) du côté opposé à l'intérieur de la languette de fermeture (10) elle est guidée vers l'espace intérieur inférieur.

4. Dispositif de ceinture de sécurité selon l'une quelconque des revendications précédentes, **caractérisé en ce que** la distance entre les fonds de rainures (16) des rainures de guidage (3) correspond à peu près à la largeur de la languette de fermeture (10).

5. Dispositif de ceinture de sécurité selon l'une quelconque des revendications précédentes, **caractérisé en ce que** la butée pour l'appui de la languette de fermeture est formée par une diminution de la largeur de rainure aux extrémités des rainures de guidage opposées aux ouvertures d'introduction.

6. Dispositif de ceinture de sécurité selon l'une quelconque des revendications 1 à 4, **caractérisé en ce que** la butée pour l'appui de la languette de fermeture (10) est formée par les parois de butée (6) obturant totalement ou partiellement les extrémités inférieures des rainures de guidage (3).

7. Dispositif de ceinture de sécurité selon l'une quelconque des revendications précédentes, **caractérisé en ce que** les parois de rainure (7) des rainures de guidage (3) espacées de la paroi intérieure de l'habitacle (1) sont flexibles de manière élastique à peu près perpendiculairement à la paroi intérieure de l'habitacle (1) au moins dans leurs zones proches des ouvertures d'introduction (5).

8. Dispositif de ceinture de sécurité selon la revendication 7, **caractérisé en ce qu'**au moins l'une des parois de rainure (7) d'une rainure de guidage (3) est munie d'un bourrelet (9) faisant saillie vers l'autre paroi de rainure (8).

9. Dispositif de ceinture de sécurité selon la revendication 8, **caractérisé en ce que** le bourrelet (9) est prévu à proximité de l'ouverture d'introduction (5) de la rainure de guidage (3).

10. Dispositif de ceinture de sécurité selon l'une quelconque des revendications précédentes, **caractérisé en ce que** l'étui de retenue (2) est disposé dans une zone de la paroi intérieure de l'habitacle (1) faisant saillie vers l'intérieur du véhicule automobile, et s'étendant à peu près de manière convexe entre une zone supérieure et une zone inférieure de l'espace intérieur.

11. Dispositif de ceinture de sécurité selon l'une quelconque des revendications précédentes, **caractérisé en ce que** l'étui de retenue est fixé sur la paroi intérieure de l'habitacle sous forme d'élément de construction séparé.

12. Dispositif de ceinture de sécurité selon la revendication 11, **caractérisé en ce que** l'étui de retenue est un élément en matière plastique, en particulier un élément en matière plastique moulée par injection.

13. Dispositif de ceinture de sécurité selon l'une quelconque des revendications 1 à 10, **caractérisé en ce que** l'étui de retenue (2) fait partie intégrante de la paroi intérieure de l'habitacle (1).

14. Dispositif de ceinture de sécurité selon l'une quelconque des revendications précédentes, **caractérisé en ce que** la paroi intérieure de l'habitacle (1) est un élément en matière plastique, en particulier un élément en matière plastique moulée par injection.

15. Dispositif de ceinture de sécurité selon l'une quelconque des revendications précédentes, **caractérisé en ce que** l'étui de retenue (2) est surélevé en saillie par rapport au contour de la paroi intérieure de l'habitacle (1).

16. Dispositif de ceinture de sécurité selon l'une quelconque des revendications 1 à 14, **caractérisé en ce que** l'étui de retenue (2) est encastré , en particulier complètement encastré, dans le contour de la paroi intérieure de l'habitacle (1).
